# EUROPEAN PATENT SPECIFICATION

(11) **EP 1 272 880 B1**
(45) Date of publication and mention of the grant of the patent: **13.10.2004**
(21) Application number: 00965024.3
(22) Date of filing: 20.07.2000
(51) Int. Cl.: G02B 6/293, G02B 6/16

(54) **GRATING COIL PACKAGE FOR REDUCED FIBER STRAIN**
GEHÄUSE MIT BEUGUNGSGITTERFASERWICKEL ZUR VERMINDERUNG VON FASERDEHNUNG
BOITIER COMPRENANT UNE FIBRE EN BOBINE AVEC UN RESEAU, LE BOITIER PERMETTANT UNE MOINDRE TENSION SUR LA FIBRE

(30) Priority: 14.03.2000 US 525193
(43) Date of publication of application: 08.01.2003
(73) Proprietor: 3M Innovative Properties Company, St. Paul, MN 55133-3427 (US)
(72) Inventor: OLSON, Grieg, A., Saint Paul, MN 55133-3427 (US)
(74) Representative: Hilleringmann, Jochen
(86) International application number: PCT/US2000/025263
(87) International publication number: WO 2001/069294

(56) References cited:
- US-A- 5 841 920
- US-A- 5 887 107

## Description

### Field of the Invention

The present invention relates generally to a package for an optical fiber Bragg grating, and more particularly, to a package for an optical fiber Bragg grating fiber that reduces the strain imposed on the fiber grating as the ambient temperature fluctuates.

### Background of the Invention

A conventional Bragg grating comprises an optical fiber in which the index of refraction undergoes periodic perturbations along its length. The perturbations may be equally spaced, as in the case of an unchirped grating, or may be unequally spaced, as in the case of a chirped grating. The fiber grating reflects light over a given waveband centered around a wavelength equal to twice the spacing between successive perturbations. The remaining wavelengths pass essentially unimpeded. Such fiber Bragg gratings are typically employed in a variety of applications including filtering, stabilization of semiconductor lasers, reflection of fiber amplifier pump energy, and compensation for fiber dispersion.

Fiber gratings are typically mounted on a substrate or wound around a retaining element, which are in turn secured in a housing. Since the fiber grating and the substrate or retaining element generally have different thermal coefficients of expansion, the fiber grating will typically be under tension or stress as the ambient temperature fluctuates. To prolong the expected lifetime of the fiber grating, however, the grating ideally should be packaged in such a way that it is under minimal stress.

US-A-5,887,107 discloses a method of securing an optical fiber Bragg grating to a retaining element. This method comprises the step of wrapping the optical fiber Bragg grating around the retaining element and affixing first and second ends of the fiber Bragg grating to the retaining element. EP-A-0 466 135 discloses an optical fiber wrapped in a helical groove on a bobbin.

Packages for fiber grating often address temperature fluctuations because both the refractive index of the grating and the distance between successive perturbations are temperature dependent. As a result, the reflected waveband is also temperature dependent. In many cases, however, it is desirable to provide a stabilized reflection band that is temperature independent. In other cases, it is sufficient to maintain the entire length of the fiber grating at a uniform temperature so that, while the reflected waveband may be shifted, it will not also be distorted. Copending Appl. Serial No. 09/524,862 entitled "Thermally Managed Package for Fiber Optic Bragg Gratings" filed on even date herewith and published as WO-A-01/69293, discloses a package for an optical fiber Bragg grating that includes a retaining element about which the optical fiber is wound. A housing is provided which is adapted to receive the retaining element therein. The housing has a relatively low thermal conductivity and the retaining element has a relatively high thermal conductivity. Such an arrangement ensures that the temperature of the Bragg grating remains substantially uniform even when the ambient temperature undergoes substantial fluctuations. For example, if the exterior of the housing is heated nonuniformly, the low conductivity material from which the housing is formed will appreciably reduce the rate of heat flow into the interior of the housing. Moreover, the heat that does penetrate the housing will be rapidly spread over the entire length of the fiber Bragg grating by the high conductivity member. As a result, the grating will quickly reach a new equilibrium temperature that is uniform along its entirety. Unfortunately, the grating package disclosed in this reference does not also prevent the fiber grating from experiencing substantial strain as the ambient temperature fluctuates.

Accordingly, it would be desirable to provide a package for a fiber Bragg grating such as shown in the previously mentioned patent application, which reduces the strain experienced by the grating as the ambient temperature fluctuates.

### Summary of the Invention

The present invention provides a method for securing an optical fiber Bragg grating to a retaining element having a helical groove according to claim 1, and a package for an optical fiber Bragg grating comprising such a retaining element as defined in claim 15. The dependent claims relate to individual embodiments.

In one aspect, the present invention relates to a method for securing an optical fiber Bragg grating to a retaining element equipped with a helical groove. In accordance with the method, an optical fiber Bragg grating is wrapped around the retaining element so that the optical fiber Bragg grating extends in and along the helical groove. Next, an excess length of the optical fiber Bragg grating is provided in the helical groove to substantially alleviate tension exerted upon the optical fiber Bragg grating. Finally, the first and second ends of the fiber Bragg grating are affixed to the retaining element.

In some embodiments of the present invention, the step of providing the excess length of fiber includes the step of wrapping the Bragg grating around the retaining element so that substantially no tension is exerted upon the Bragg grating until a maximum temperature is exceeded. In some cases, the maximum temperature corresponds to a maximum operating temperature of optical fiber Bragg grating.

In other embodiments of the present invention, the step of providing the excess length of fiber includes the steps of securing a spacing element across a plurality of lays of the helical groove, and the wrapping step includes the step of wrapping the optical fiber Bragg grating around both the retaining element and the spacing element so that the optical fiber Bragg grating extends in and along the helical groove.

In still other embodiments of the present invention, the spacing element may be removed after affixing the first and second ends of the fiber Bragg grating to the retaining element.

In other embodiments of the present invention, the spacing element is generally cylindrical in shape. Moreover, the helical groove may be-located in an outer surface of the retaining element and the cylindrical spacing element may have a portion of its circumferential surface that conforms to the outer surface of the retaining element.

The invention will be described in further detail hereinbelow and with reference to the drawings.

### Brief Description of the Drawings

FIG. 1 shows an exemplary optical fiber Bragg grating;
FIG. 2 shows a perspective view of the interior of one embodiment of a package for containing a Bragg grating fiber constructed in accordance with the present invention;
FIG. 3 shows a perspective view of the exterior of the package shown in FIG. 2;
FIG. 4(a) shows a detailed view of a portion of the retaining element illustrating the helical groove;
FIG. 4(b) shows the complete retaining element that is partially illustrated in FIG. 4(a);
FIG. 4(c) shows a plan view of the retaining element with the fiber grating wound around the retaining element and the spacing element;
FIG. 4(d) shows the portion of the retaining element depicted in FIG. 4(a) with the fiber grating loosely situated in the groove;
FIG. 5 shows the wavelength shift of the waveband reflected by the fiber Bragg grating between about 0°C and 60°C for a number of different arrangements securing the fiber grating to the retaining element; and
FIG. 6 shows the portion of the wavelength shifts shown in FIG. 5 that is attributable to the thermal expansion coefficient of the retaining element.

### Detailed Description

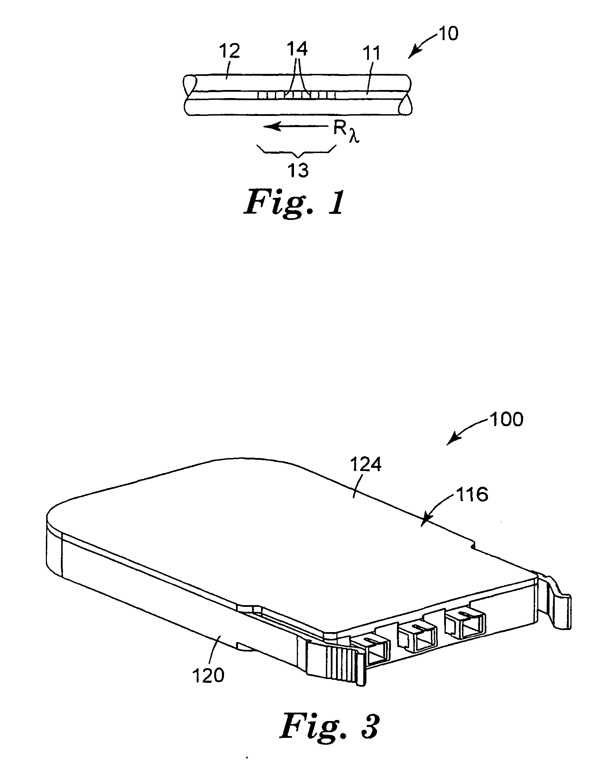

Referring now to the drawings, and in particular to FIG. 1 thereof, an optical waveguide **10** is shown to be configured as an optical fiber of which only a relatively short longitudinal portion is depicted and which includes a fiber core **11** and a fiber cladding **12** surrounding the fiber core. The fiber core incorporates a grating region **13** that includes a multitude of grating elements **14**, each extending substantially normal to the longitudinal axis of the core. If the grating is unchirped, the grating elements are equidistantly spaced from one another as considered in the longitudinal direction of the optical fiber. Alternatively, if the grating is to be chirped, the spacing between grating elements will vary in a predetermined manner.

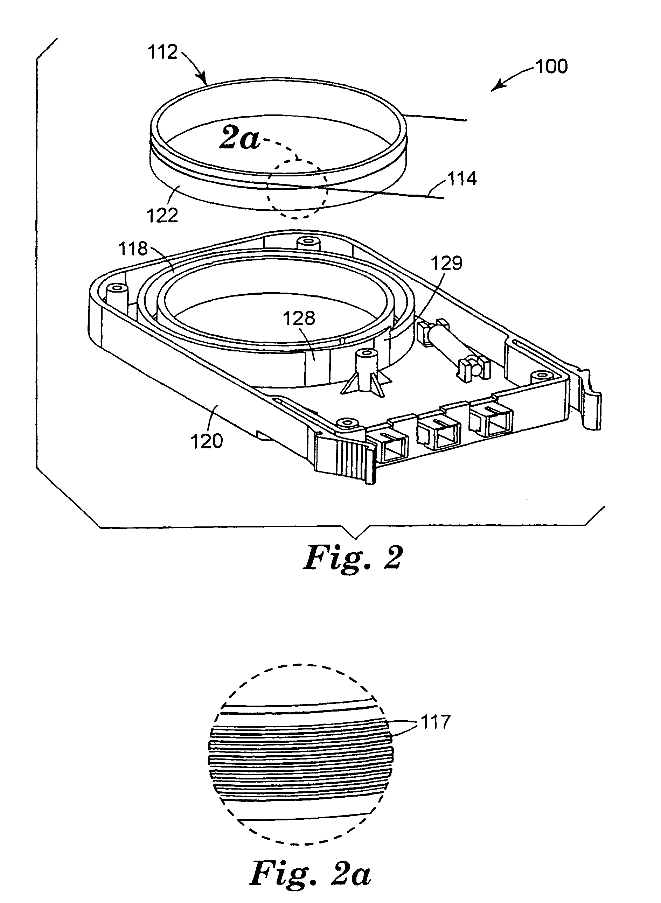

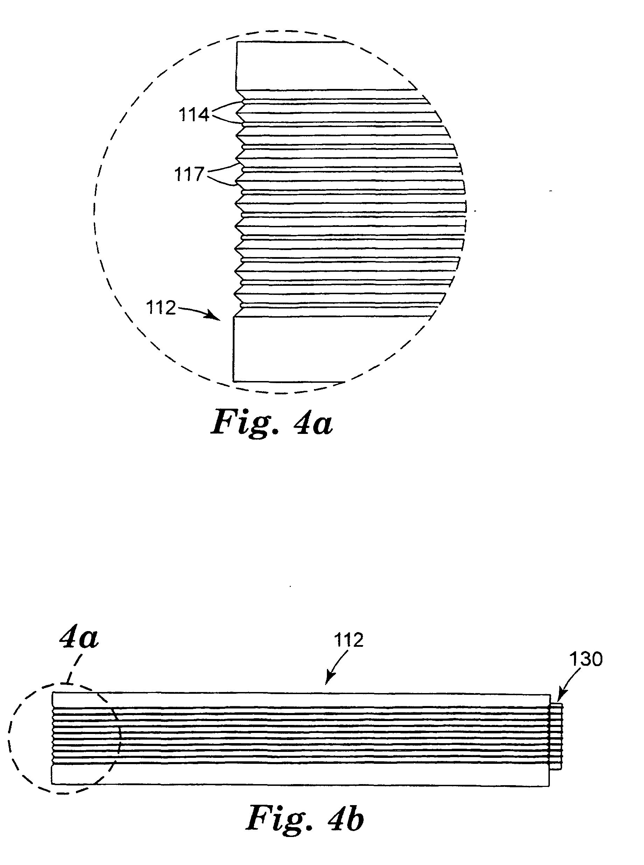

FIGS. 2 and 3 are perspective views of one embodiment of the Bragg grating package **100** constructed in accordance with the present invention. The package includes a retaining element **112** that holds the fiber grating **114** in a helical groove **117** located on the outer surface of the retaining element. In the embodiment depicted in FIG. 2, the retaining element is formed as a ring or cylinder that has an outer circumferential surface **122** in which the helical groove is inscribed. Of course, one of ordinary skill in the art will appreciate that the retaining element need not be cylindrical in shape. For example, the retaining element may have a cross-section that is elliptical or some other non-circular shape. Preferably, however, the retaining element is devoid of sharp comers and is provided with a generally convex outer surface in which the helical groove may be inscribed. Furthermore, the retaining element need not have an interior that is hollow or has a hollow annular region.

The retaining element may be secured in a housing **116** that protects the fiber grating, as shown in FIG. 3. In the embodiment of the invention shown in FIGS. 2 and 3, the housing includes first and second portions **120** and **124** that engage with one another to form a cavity therein. The first and second portions of the housing may be connected together by any convenient means, including fasteners, hinges or the like. The interior of the housing accommodates a retaining element **112**. For example, in the embodiment of the invention depicted in FIG. 2, the retaining element slides into a circular groove **118** located in the first or bottom portion of the housing. If the housing is formed from a plastic material, the circular groove may be integrally formed with the housing. When retaining element is positioned in the circular groove, the fiber grating exits the circular groove via slots **128** or **129**. The slots may extend the full width of the groove, or alternatively, may extend only a portion of the width of the groove.

FIG. 4(a) shows a detailed view of a portion of the retaining element **112**, which is fully shown in FIG. 4(b). As shown, the helical groove **117** in which the fiber **114** is situated is V-shaped. As previously mentioned, the fiber grating should be secured to the retaining element with a minimum of stress to prolong the grating lifetime. In FIG. 4(a), the fiber grating is shown tightly wrapped in the groove so that the fiber **144** is situated at the bottom or innermost portion of the groove.

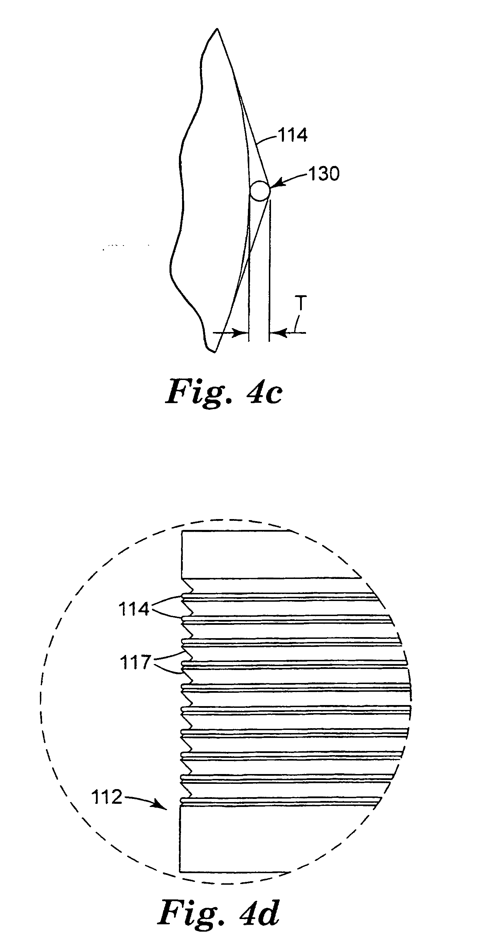

In accordance with the present invention, the stress imposed on the fiber grating is alleviated by ensuring that the fiber grating is loosely wrapped around the retaining element, yet remains within the groove. This result may be accomplished in a variety of different ways. For example, with reference to FIGS. 4(b) and 4(c), a spacing element **130** may be secured to the retaining element prior to wrapping the grating into the groove **117.** The spacing element has a length that allows it to extend across each lay of the groove. That is, as shown in FIG. 4(b), the spacing element extends transverse to the helical groove. The spacing element may be shaped in a number of different ways. The spacing element preferably has a shape with no sharp comers around which the fiber grating must bend. For example, the spacing element may be cylindrical in shape so that the fiber grating bends around the outer circumferential surface of the cylinder. In some embodiments, a portion of the circumferential surface of the cylindrical spacing element may have a shape that conforms to the outer surface of the retaining element so that the spacing element is more easily securable to the retaining element. Alternatively, this portion of the spacing element contacting the retaining element may be planar so that the retaining element will not roll along the outer surface of the spacing element.

Once the grating has been wound about the retaining element and the spacing element, an adhesive is applied to the two ends of the fiber grating so that they are fixed to the retaining element. Once the adhesive has cured, the spacing element may be removed, thus leaving excess length of fiber in the groove that alleviates stress imposed on the fiber grating. FIG. 4(d) shows the portion of the retaining element depicted in FIG. 4(a) with the fiber grating loosely situated in the groove. The groove should have a depth sufficient to ensure that fiber grating will not slip out of the groove even when the excess length of fiber that needs to be accommodated is at a maximum. For example, it has been determined that, for a retaining element having a four inch diameter which is designed to operate over a temperature range from about -40 to +80°C, the groove should be at least 0.02 inches deep.

As best shown in FIG. 4(c), the spacing element **130** has a thickness T that determines how much excess length of fiber **114** will be provided in the groove **117** so that the fiber is loosely situated in the groove without any tension. The fiber grating will be more loosely situated in the groove as the thickness T of the spacing element increases. The particular thickness of the spacing element that is selected will depend on a number factors, including the size of the retaining element, the material from which it is formed, and the temperature at which the adhesive is cured. In general, the optimal thickness of the spacing element can be readily determined experimentally. Since the tension on the fiber increases at increasing temperatures, the fiber preferably will be arranged so that a small amount of tension will be exerted at a temperature just above the maximum operating temperature to which the fiber will be exposed. Accordingly, the fiber will be under substantially no stress at all operating temperatures.

In an alternative embodiment of the invention, the stress on the fiber grating may be alleviated without a spacing element by winding the fiber grating around the retaining element and securing it thereto after the retaining element is heated to its maximum operating temperature. As a result, the fiber grating will experience little or no tension at all temperatures below its maximum operating temperature.

### EXAMPLES 1 - 3

EXAMPLES 1-3 demonstrate the wavelength shift of the reflected waveband as a function of temperature for fiber grating packages made in accordance with the present invention.

Fiber grating packages of the type depicted in FIGS. 2-3 were evaluated by determining the amount of tension they experienced at different temperatures. The retaining element employed in this example had a diameter of 4.125 inches, and the helical groove was v-shaped with a depth of about 0.02 inches. The tension was determined by measuring the wavelength shift of the reflected waveband at different temperatures.

In EXAMPLE 1, the grating was wound about the retaining element at room temperature with substantially no excess fiber in accordance with a conventional securing technique. As a result, the fiber grating was under tension at all temperatures above room temperature.

In EXAMPLE 2, the fiber grating was secured to the retaining element at an elevated temperature of 70°C so that the fiber grating was subject to a small amount of tension at this temperature and substantially no tension at lower temperatures.

In EXAMPLE 3, the fiber grating was secured to the retaining element with a spacing element as previously described. The spacing element was cylindrically shaped and had a diameter of about 0.01 inches.

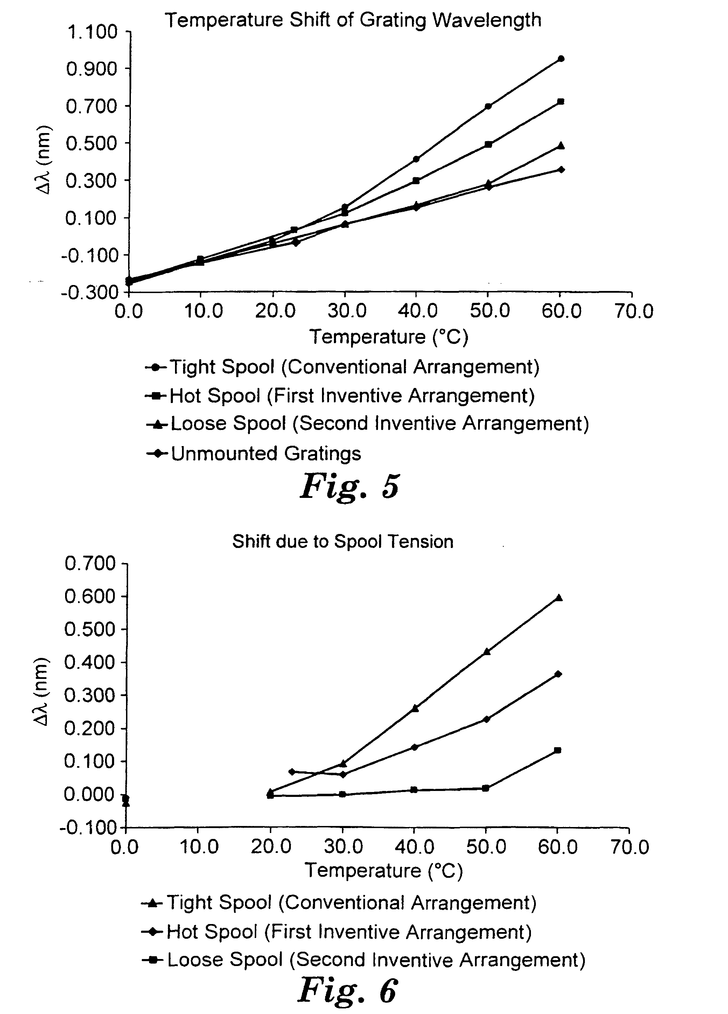

The wavelength shifts for the above noted arrangements were measured over the range of about 0°C and 60°. The results are depicted graphically in FIG. 5. For comparison, the wavelength shift of an unmounted fiber grating is also given.

The temperature dependence of the wavelength shifts shown in FIG. 5 comprise two components, one due to the thermal expansion coefficient of the retaining element and the other due to the temperature dependent properties (i.e., thermal expansion coefficient and refractive index) of the fiber grating itself. In order to examine the wavelength shifts attributable only to the expansion coefficient of the retaining element, the wavelength shift of the unmounted fiber should be subtracted from each set of data shown in FIG 5. This result is shown in FIG. 6.

FIG. 6 shows the wavelength shift of the reflected waveband attributable to the thermal expansion coefficient of the retaining element for each of the arrangements shown in FIG. 5. In the conventional arrangement, in which the fiber was under tension at temperatures above room temperature, the wavelength shift, as expected, increases relatively rapidly at temperatures above about 20°C. In the arrangement of EXAMPLE 2, in which the fiber was not subject to significant tension until about 70°C, the wavelength shift did not begin until about 30°C (indicating that the fiber was not subject to significant tension at lower temperatures), above which the wavelength shift increased appreciably but at a rate less than in the conventional arrangement. In the arrangement of EXAMPLE 3, however, the wavelength shift is negligible until about 50°C, above which it increases, but at a rate significantly less than in the other two cases. Accordingly, the arrangements of EXAMPLES 2 and 3 both imposed less tension on the fiber grating than that experienced with the conventional technique. Nevertheless, the arrangements of EXAMPLES 2-3 did not provide equal results. Specifically, a comparison of the two arrangements shows that winding the fiber grating around a spacing element provided superior results to winding the fiber grating around the spacing element at elevated temperatures. In principle, however, both inventive techniques should be able to provide equally superior results by more precisely controlling various parameters such as the temperature of the retaining element and the tension imposed on the fiber grating when it is wound around the retaining element at an elevated temperature.

It is possible to improve the results attainable with the gratings packages of the present invention beyond those depicted in FIG. 6 by using, for example, a thicker spacing element **130** so that additional excess length of fiber is provided in the groove **117.** In such a case, the fiber grating can be exposed to even higher temperatures than shown in FIG. 6, while maintaining minimal stress on the grating. Alternatively, this same result can be achieved by using more than one spacing element.

As previously mentioned, in some cases it is desirable to minimize the temperature gradient on the fiber grating so that, while the reflected waveband may be shifted, it will not also be distorted. An example of such a package is disclosed in Copending Appl. Serial No. 09/524,862 entitled "Thermally Managed Package for Fiber Optic Bragg Gratings" and filed on even date herewith, which features a relatively low thermal conductivity housing and a relatively high thermal conductivity retaining element. Such an arrangement ensures that the temperature of the Bragg grating remains substantially uniform even when the ambient temperature undergoes substantial fluctuations. The present invention may be employed in a package of this type so that the fiber Bragg grating remains at a substantially uniform temperature while substantially no strain is imparted to the grating even as the ambient temperature fluctuates. For example, the retaining element shown in FIG. 2 may be formed from a high thermally conducting material such as copper, which has a thermal conductivity of 401 W/m-K. The housing may be a thermally insulating housing formed from any of a number of materials, including a variety of different plastics. One such plastic, which is believed to be a polystyrene/polypropylene blend or alloy, is currently available from the Dow Chemical Company, Midland, Michigan under the trade name Questra™. Another suitable plastic is a resin available from Ciba-Geigy Corporation, Greensboro, North Carolina under the trade name Cibatool®, which has a thermal conductivity of 0.2002 W/m-K.

The preceding description of the present invention is merely illustrative, and is not intended to be limiting. Therefore, the scope of the present invention should be construed solely by reference to the appended claims.

## Claims

1. A method for securing an optical fiber Bragg grating (114) to a retaining element (112) having a helical groove (117), said method comprising the steps of:
- wrapping the optical fiber Bragg grating (114) around the retaining element (112) so that the optical fiber Bragg grating (114) extends in and along the helical groove (117);
- providing an excess length of fiber in the helical groove (117) to substantially alleviate tension exerted upon the optical fiber Bragg grating (114); and
- affixing first and second ends of the fiber Bragg grating (114) to the retaining element (112).

2. The method of claim 1, wherein the step of providing the excess length of fiber includes the step of wrapping the Bragg grating (114) around the retaining element (112) so that substantially no tension is exerted upon the Bragg grating (114) until a maximum temperature is exceeded.

3. The method of claim 2, wherein the maximum temperature corresponds to a maximum operating temperature of optical fiber Bragg grating (114).

4. The method of claim 1, wherein the step of providing the excess length of fiber includes the steps of securing a spacing element (130) across a plurality of lays of the helical groove (117) and the wrapping step includes the step of wrapping the optical fiber Bragg grating (114) around both the retaining element (112) and the spacing element (130) so that the optical fiber Bragg grating (114) extends in and along the helical groove (117).

5. The method of claim 4, further comprising the step of removing the spacing element (130) after affixing the first and second ends of the fiber Bragg grating (114) to the retaining element (112).

6. The method of claim 4 or 5, wherein the spacing element (130) has a generally convex surface about which the fiber Bragg grating (114) is wrapped.

7. The method of claim 4 or 5, wherein the spacing element (130) is generally cylindrical in shape.

8. The method of claim 7, wherein the helical groove (117) is located in an outer surface of the retaining element (112) and the cylindrical spacing element (130) has a portion of its circumferential surface that conforms to said outer surface of the retaining element (112).

9. The method of claim 7, wherein the cylindrical spacing element (130) has a portion of its circumferential surface that is substantially planar for contacting an outer surface of the retaining element (112).

10. The method of any one of claims 4 to 9, wherein the step of providing the excess length of fiber includes the step of wrapping the Bragg grating (114) around the retaining element (112) so that substantially no tension is exerted upon the Bragg grating (114) until a maximum temperature is exceeded.

11. The method of claim 10, wherein the maximum temperature corresponds to a maximum operating temperature of optical fiber Bragg grating (114).

12. The method of any one of claims 1 to 11, wherein the fiber Bragg grating (114) is affixed to the retaining element (112) with adhesive.

13. The method of any one of claims 1 to 12, wherein the step of wrapping the optical fiber Bragg grating (114) around the retaining element (112) is performed while the retaining element (112) is at a temperature above normal room temperature.

14. The method of claim 13, wherein said temperature at which the optical fiber Bragg grating (114) is wrapped around the retaining element (112) corresponds to a maximum operating temperature of the optical fiber Bragg grating (114).

15. A package for an optical fiber Bragg grating (114), comprising:
- an optical fiber Bragg grating (114);
- a retaining element (112) supporting the optical fiber Bragg grating (114); and
- a housing (116) adapted to receive the retaining element (112) therein,
- wherein the optical fiber Bragg grating (114) has first and second ends affixed to the retaining element (112) and arranged in a groove,
**characterized in that**
- said retaining element (112) has a helical groove (117) in which said optical fiber extends, said optical fiber Bragg grating (114) being arranged in said groove (117) by providing an excess length of fiber in said groove (117) such that tension exerted upon the optical fiber Bragg grating (114) is substantially alleviated.

16. The package of claim 15, wherein substantially no tension is exerted upon the Bragg grating (114) until a maximum temperature is exceeded.

17. The package of claim 16, wherein the maximum temperature corresponds to a maximum operating temperature of the optical fiber Bragg grating (114).

18. The package of any one of claims 15 to 17, wherein the excess length of fiber is provided by securing a spacing element (130) across a plurality of lays of the helical groove (117), wrapping the optical fiber Bragg grating (114) around both the retaining element (112) and the spacing element (130) so that the optical fiber Bragg grating (114) extends in and along the helical groove (117), and removing the spacing element (130).

19. The package of any one of claims 15 to 18, wherein the fiber Bragg grating (114) is affixed to the retaining element (112) with an adhesive.

20. The package of any one of claims 15 to 19, wherein said housing (116) has a thermal conductivity below that of the retaining element (112).

21. The package of any one of claims 15 to 20, wherein said retaining element (112) is formed as a ring having an outer surface around which the optical fiber is wound.

22. The package of any one of claims 15 to 21, wherein said retaining element (112) is formed from copper.

23. The package of any one of claims 15 to 22, wherein said housing (116) is formed from a plastic material.

24. The package of any one of claims 15 to 23, wherein said housing (116) includes first and second portions (120, 124).

25. The package of claim 24, further comprising a fastener for sealing together said first and second portions (120, 124).

26. The package of any one of claims 15 to 25, wherein said housing (116) includes a circular groove for containing said retaining element (112).

## Patentansprüche

1. Verfahren zum Befestigen eines faseroptischen Bragg-Gitters (114) an einem Halteelement (112) mit einer spiralförmigen Nut (117), wobei das Verfahren die folgenden Schritte aufweist:
- Wickeln des faseroptischen Bragg-Gitters (114) um das Halteelement (112) derart, daß sich das faseroptische Bragg-Gitter (114) in der spiralförmigen Nut (117) und entlang dieser erstreckt;
- Bereitstellen einer Faserüberlänge in der spiralförmigen Nut (117), um auf das faseroptische Bragg-Gitter (114) ausgeübte Zugspannung im wesentlichen zu mildern; und
- Befestigen des ersten und zweiten Endes des Bragg-Fasergitters (114) am Halteelement (112).

2. Verfahren nach Anspruch 1, wobei der Schritt des Bereitstellens der Faserüberlänge den Schritt aufweist, das Bragg-Gitter (114) derart um das Halteelement (112) zu wickeln, daß auf das Bragg-Gitter (114) im wesentlichen keine Zugspannung ausgeübt wird, bis eine Maximaltemperatur überschritten wird.

3. Verfahren nach Anspruch 2, wobei die Maximaltemperatur einer Maximalbetriebstemperatur des faseroptischen Bragg-Gitters (114) entspricht.

4. Verfahren nach Anspruch 1, wobei der Schritt des Bereitstellens der Faserüberlänge die Schritte des Befestigens eines Abstandselements (130) über eine Mehrzahl von Lagen der spiralförmigen Nut (117) hinweg und der Wickelschritt den Schritt des Wickelns des faseroptischen Bragg-Gitters (114) sowohl um das Halteelement (112) als auch das Abstandselement (130) aufweist derart, daß sich das faseroptische Bragg-Gitter (114) in der spiralförmigen Nut (117) und entlang dieser erstreckt.

5. Verfahren nach Anspruch 4, das ferner den Schritt des Entfernens des Abstandselements (130) nach dem Befestigen des ersten und zweiten Endes des Bragg-Fasergitters (114) an dem Halteelement (112) aufweist.

6. Verfahren nach Anspruch 4 oder 5, wobei das Abstandselement (130) eine im Wesentlichen konvexe Oberfläche aufweist, um die das Bragg-Fasergitter (114) gewickelt ist.

7. Verfahren nach Anspruch 4 oder 5, wobei das Abstandselement (130) eine im Wesentlichen zylindrische Gestalt aufweist.

8. Verfahren nach Anspruch 7, wobei die spiralförmige Nut (117) sich in einer Außenfläche des Halteelements (112) befindet und die Umfangsfläche des zylindrischen Abstandselements (130) einen Bereich aufweist, welcher der Außenfläche des Halteelements (112) konform ist.

9. Verfahren nach Anspruch 7, wobei die Umfangsfläche des zylindrischen Abstandselements (130) einen Bereich aufweist, der im wesentlichen planar ist, zur Kontaktierung einer Außenfläche des Halteelements (112).

10. Verfahren nach einem der Ansprüche 4 bis 9, wobei der Schritt des Bereitstellens der Faserüberlänge den Schritt aufweist, das Bragg-Gitter (114) derart um das Halteelement (112) zu wickeln, daß auf das Bragg-Gitter (114) im wesentlichen keine Zugspannung ausgeübt wird, bis eine Maximaltemperatur überschritten wird.

11. Verfahren nach Anspruch 10, wobei die Maximaltemperatur einer Maximalbetriebstemperatur des faseroptischen Bragg-Gitters (114) entspricht.

12. Verfahren nach einem der Ansprüche 1 bis 11, wobei das Bragg-Fasergitter (114) mit Kleber an dem Halteelement (112) befestigt wird.

13. Verfahren nach einem der Ansprüche 1 bis 12, wobei der Schritt des Wickelns des faseroptischen Bragg-Gitters (114) um das Halteelement (112) herum durchgeführt wird, während sich das Halteelement (112) auf einer Temperatur über normaler Raumtemperatur befindet.

14. Verfahren nach Anspruch 13, wobei die Temperatur, bei der das faseroptische Bragg-Gitter (114) um das Halteelement (112) gewickelt wird, einer Maximalbetriebstemperatur des faseroptischen Bragg-Gitters (114) entspricht.

15. Baueinheit für ein faseroptisches Bragg-Gitter (114), die folgendes aufweist:
- ein faseroptisches Bragg-Gitter (114);
- ein Halteelement (112), das das faseroptische Bragg-Gitter (114) trägt; und
- ein Gehäuse (116), das dafür ausgelegt ist, das Halteelement (112) darin aufzunehmen,
- wobei das faseroptische Bragg-Gitter (114) ein erstes und zweites Ende aufweist, die an dem Halteelement (112) befestigt und in einer Nut angeordnet sind,
**dadurch gekennzeichnet, daß**
- das Halteelement (112) eine spiralförmige Nut (117) aufweist, in der sich die optische Faser erstreckt, wobei das faseroptische Bragg-Gitter (114) in der Nut (117) angeordnet ist, indem in der Nut (117) eine Faserüberlänge bereitgestellt wird, derart, daß auf das faseroptische Bragg-Gitter (114) ausgeübte Zugspannung im wesentlichen gemildert ist.

16. Baueinheit nach Anspruch 15, wobei auf das Bragg-Gitter (114) im wesentlichen keine Zugspannung ausgeübt wird, bis eine Maximaltemperatur überstiegen ist.

17. Baueinheit nach Anspruch 16, wobei die Maximaltemperatur einer Maximalbetriebstemperatur des faseroptischen Bragg-Gitters (114) entspricht.

18. Baueinheit nach einem der Ansprüch 15 bis 17, wobei die Faserüberlänge bereitgestellt ist durch Befestigen eines Abstandselements (130) über eine Mehrzahl von Lagen der spiralförmigen Nut (117) hinweg, Wickeln des faseroptischen Bragg-Gitters (114) sowohl um das Halteelement (112) als auch das Abstandselement (130) derart, daß sich das faseroptische Bragg-Gitter (114) in der spiralförmigen Nut (117) und entlang dieser erstreckt, und Entfernen des Abstandselements (130).

19. Baueinheit nach einem der Ansprüche 15 bis 18, wobei das Bragg-Fasergitter (114) mit Kleber an dem Halteelement (112) befestigt wird.

20. Baueinheit nach einem der Ansprüche 15 bis 19, wobei das Gehäuse (116) eine Wärmeleitfähigkeit unter der des Halteelements (112) aufweist.

21. Baueinheit nach einem der Ansprüche 15 bis 20, wobei das Halteelement (112) als ein Ring mit einer Außenfläche ausgebildet ist, um die die optische Faser gewickelt ist.

22. Baueinheit nach einem der Ansprüche 15 bis 21, wobei das Halteelement (112) aus Kupfer ausgebildet ist.

23. Baueinheit nach einem der Ansprüche 15 bis 22, wobei das Gehäuse (116) aus einem Kunststoffmaterial ausgebildet ist.

24. Baueinheit nach einem der Ansprüche 15 bis 23, wobei das Gehäuse (116) einen ersten und zweiten Teil (120, 124) aufweist.

25. Baueinheit nach Anspruch 24, die weiterhin ein Verbindungselement aufweist, um den ersten und zweiten Teil (120, 124) miteinander zu verbinden.

26. Baueinheit nach einem der Ansprüche 15 bis 25, wobei das Gehäuse (116) eine kreisförmige Nut zum Aufnehmen des Halteelements (112) aufweist.

## Revendications

1. Procédé pour fixer un réseau de Bragg de fibre optique (114) sur un élément de retenue (112) comportant une rainure hélicoïdale (117), ledit procédé comprenant les étapes consistant à:
- enrouler le réseau de Bragg de fibre optique (114) autour de l'élément de retenue (112) de telle sorte que le réseau de Bragg de fibre optique (114) s'étende dans et le long de la rainure hélicoïdale (117);
- former une longueur de fibre excessive dans la rainure hélicoïdale (117) afin d'atténuer sensiblement la tension exercée sur le réseau de Bragg de fibre optique (114); et
- fixer des première et deuxième extrémités du réseau de Bragg de fibre (114) sur l'élément de retenue (112).

2. Procédé selon la revendication 1, dans lequel l'étape consistant à former la longueur de fibre excessive comprend l'étape d'enroulement du réseau de Bragg (114) autour de l'élément de retenue (112), de telle sorte que substantiellement aucune tension ne soit exercée sur le réseau de Bragg (114) jusqu'à ce qu'une température maximum soit dépassée.

3. Procédé selon la revendication 2, dans lequel la température maximum correspond à une température de fonctionnement maximum du réseau de Bragg de fibre optique (114).

4. Procédé selon la revendication 1, dans lequel l'étape consistant à former la longueur de fibre excessive comprend les étapes de fixation d'un élément d'écartement (130) à travers une pluralité de circonvolutions de la rainure hélicoïdale (117), et l'étape d'enroulement comprend l'étape consistant à enrouler le réseau de Bragg de fibre optique (114) autour à la fois de l'élément de retenue (112) et de l'élément d'écartement (130) de telle sorte que le réseau de Bragg de fibre optique (114) s'étende dans et le long de la rainure hélicoïdale (117).

5. Procédé selon la revendication 4, comprenant en outre l'étape consistant à retirer l'élément d'écartement (130) après la fixation des première et deuxième extrémités du réseau de Bragg de fibre (114) sur l'élément de retenue (112).

6. Procédé selon la revendication 4 ou 5, dans lequel l'élément d'écartement (130) présente une surface essentiellement convexe autour de laquelle le réseau de Bragg de fibre (114) est enroulé.

7. Procédé selon la revendication 4 ou 5, dans lequel l'élément d'écartement (130) est de forme essentiellement cylindrique.

8. Procédé selon la revendication 7, dans lequel la rainure hélicoïdale (117) est ménagée dans une surface extérieure de l'élément de retenue (112), et l'élément d'écartement cylindrique (130) a une partie de sa surface circonférentielle qui se conforme à ladite surface extérieure de l'élément de retenue (112).

9. Procédé selon la revendication 7, dans lequel l'élément d'écartement cylindrique (130) a une partie de sa surface circonférentielle qui est essentiellement plane pour entrer en contact avec une surface extérieure de l'élément de retenue (112).

10. Procédé selon l'une quelconque des revendications 4 à 9, dans lequel l'étape consistant à former la longueur de fibre excessive comprend l'étape d'enroulement du réseau de Bragg (114) autour de l'élément de retenue (112) de telle sorte que substantiellement aucune tension ne soit exercée sur le réseau de Bragg (114) jusqu'à ce qu'une température maximum soit dépassée.

11. Procédé selon la revendication 10, dans lequel la température maximum correspond à une température de fonctionnement maximum du réseau de Bragg de fibre optique (114).

12. Procédé selon l'une quelconque des revendications 1 à 11, dans lequel le réseau de Bragg de fibre (114) est fixé sur l'élément de retenue (112) à l'aide d'un adhésif.

13. Procédé selon l'une quelconque des revendications 1 à 12, dans lequel l'étape d'enroulement du réseau de Bragg de fibre optique (114) autour de l'élément de retenue (112) est exécutée pendant que la température de l'élément de retenue (112) est supérieure à la température ambiante normale.

14. Procédé selon la revendication 13, dans lequel ladite température à laquelle le réseau de Bragg de fibre optique (114) est enroulé autour de l'élément de retenue (112) correspond à une température de fonctionnement maximum du réseau de Bragg de fibre optique (114).

15. Boîtier pour un réseau de Bragg de fibre optique (114), comprenant:
- un réseau de Bragg de fibre optique (114);
- un élément de retenue (112) supportant le réseau de Bragg de fibre optique (114); et
- un logement (16) apte à recevoir en lui l'élément de retenue (112);
- dans lequel le réseau de Bragg de fibre optique (114) comporte des première et deuxième extrémités fixées sur l'élément de retenue (112) et arrangées dans une rainure,
**caractérisé en ce que**:
- ledit élément de retenue (112) comporte une rainure hélicoïdale (117) dans laquelle ladite fibre optique s'étend, ledit réseau de Bragg de fibre optique (114) étant arrangé dans ladite rainure (117) en formant une longueur de fibre excessive dans ladite rainure (117) de telle sorte qu'une tension exercée sur le réseau de Bragg de fibre optique (114) soit essentiellement atténuée.

16. Boîtier selon la revendication 15, dans lequel substantiellement aucune tension n'est exercée sur le réseau de Bragg (114) jusqu'à ce qu'une température maximum soit dépassée.

17. Boîtier selon la revendication 16, dans lequel la température maximum correspond à une température de fonctionnement maximum du réseau de Bragg de fibre optique (114).

18. Boîtier selon l'une quelconque des revendications 15 à 17, dans lequel la longueur de fibre excessive est formée en plaçant un élément d'écartement (130) à travers une pluralité de circonvolutions de la rainure hélicoïdale (117), en enroulant le réseau de Bragg de fibre optique (114) autour à la fois de l'élément de retenue (112) et de l'élément d'écartement (130) de telle sorte que le réseau de Bragg de fibre optique (114) s'étende dans et le long de la rainure hélicoïdale (117), et en retirant l'élément d'écartement (130).

19. Boîtier selon l'une quelconque des revendications 15 à 18, dans lequel le réseau de Bragg de fibre (114) est fixé sur l'élément de retenue (112) à l'aide d'un adhésif.

20. Boîtier selon l'une quelconque des revendications 15 à 19, dans lequel ledit logement (116) présente une conductivité thermique inférieure à celle de l'élément de retenue (112).

21. Boîtier selon l'une quelconque des revendications 15 à 20, dans lequel ledit élément de retenue (112) a la forme d'un anneau présentant une surface extérieure autour de laquelle la fibre optique est enroulée.

22. Boîtier selon l'une quelconque des revendications 15 à 21, dans lequel ledit élément de retenue (112) est constitué de cuivre.

23. Boîtier selon l'une quelconque des revendications 15 à 22, dans lequel ledit logement (116) est constitué d'une matière plastique.

24. Boîtier selon l'une quelconque des revendications 15 à 23, dans lequel ledit logement (116) comprend des première et deuxième parties (120, 124).

25. Boîtier selon la revendication 24, comprenant en outre une attache permettant de sceller lesdites première et deuxième parties (120, 124) l'une à l'autre.

26. Boîtier selon l'une quelconque des revendications 15 à 25, dans lequel ledit logement (116) comporte une rainure circulaire destinée à accueillir ledit élément de retenue (112).
